(19) **Europäisches Patentamt**
**European Patent Office**
**Office européen des brevets**

(11) **EP 3 109 480 B1**

(12) **EUROPEAN PATENT SPECIFICATION**

(45) Date of publication and mention
of the grant of the patent:
**03.03.2021 Bulletin 2021/09**

(21) Application number: **14882937.7**

(22) Date of filing: **18.08.2014**

(51) Int Cl.:
*F04D 27/00* *(2006.01)*        *G05D 23/19* *(2006.01)*

(86) International application number:
**PCT/CN2014/084666**

(87) International publication number:
**WO 2015/123976 (27.08.2015 Gazette 2015/34)**

(54) **METHOD AND DEVICE FOR CONTROLLING ROTATING SPEED OF FAN IN ELECTRONIC DEVICE**

VERFAHREN UND VORRICHTUNG ZUR STEUERUNG DER GESCHWINDIGKEIT EINES LÜFTERS IN EINER ELEKTRONISCHEN VORRICHTUNG

PROCÉDÉ ET DISPOSITIF POUR COMMANDER LA VITESSE DE ROTATION D'UN VENTILATEUR DANS UN DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2014 CN 201410061198**

(43) Date of publication of application:
**28.12.2016 Bulletin 2016/52**

(73) Proprietor: **ZTE Corporation**
**Shenzhen, Guangdong 518057 (CN)**

(72) Inventor: **LIAO, Yongjun**
**Shenzhen, Guangdong 518057 (CN)**

(74) Representative: **GLP S.R.L.**
**Viale Europa Unita, 171**
**33100 Udine (IT)**

(56) References cited:
**EP-A2- 2 261 768**        **WO-A1-2013/097849**
**CN-A- 1 525 272**         **CN-A- 101 865 151**
**CN-A- 101 865 151**       **CN-A- 101 871 465**
**CN-A- 102 073 328**       **CN-A- 102 129 278**
**US-A1- 2002 140 389**     **US-A1- 2004 263 105**
**US-A1- 2007 076 372**     **US-A1- 2007 297 893**
**US-A1- 2010 103 663**

**Description**

**Technical Field**

The present disclosure relates to the field of heat dissipation, and in particular to a method and device for controlling a rotating speed of a fan in an electronic device.

**Background**

With the improvement of integration level of electronic, communication and electrical devices, the power consumption of the devices gets higher. Meanwhile, the devices generate a larger volume of heat. Electronic components, especially key chips, in the devices have strict requirements on temperature. If the temperature is too high, service abnormality may occur, and even the devices may be damaged. So the heat dissipation of devices becomes a major concern. At the present, the main heat dissipation mode of the electronic devices is cooling by fans. In order to meet the requirements for dissipating heat of the system, multiple high-power fans are deployed. However, while solving the problem of heat dissipation of the system, the use of multiple fans increases the power consumption and heat radiation of the fans themselves, and especially introduces more noise.

To reduce the noise and power consumption of the devices, a speed adjustable fan is used. The method for adjusting the rotating speed of the fan adopted in the related art is setting multiple temperature points and multiple rotating speeds of the fan, and then adjusting the fan to a certain rotating speed based on the temperature collected by a temperature sensor. Such a controlling method enables the fan to run at a suitable rotating speed based on the surroundings temperature, but when the surroundings temperature fluctuates, especially when the temperature rises, the sensitivity of adjusting the rotating speed of the fan is not high enough, so it is hard to lower the temperature to dissipate heat fast.

In a related art, a method for automatically adjusting the rotating speed of a fan is provided, which sets multiple temperature detecting points to control the rotating speed of a fan more precisely, and makes the rotating speed of the fan as close to the minimum effective value as possible through the reduction of step size of the adjusted rotating speed of the fan, so that the noise and power consumption of the system is reduced. However, if the step size is too small, the heat dissipation efficiency is reduced. Moreover, when the surroundings temperature fluctuates slightly, the rotating speed of the fan may experience rebound or vibration. Such a heat dissipation mode which is sometimes hot and sometimes cold is bad for the safe running of devices and makes even a louder noise.

An effective solution has not been presented aiming at the above problems in the related art.

WO2013/097849A1 discloses a cooling method for devices generating waste heat; US2007/0076372 A1 discloses a method and apparatus for controlling rotation speed of fan; US2002/0140389 A1 discloses a method and apparatus for controlling a cooling fan; US2007/0297893 A1 discloses a fan speed change control system; US2010/0103663A1 discloses a led array beam control system; CN101865151 A discloses a method and apparatus for controlling the rotation speed of a fan in a network equipment.

Summary

Aiming at the technical problem in the related art that the rotating speed may experience rebound or vibration in a heat dissipation process of a speed adjustable fan, the embodiments of the present disclosure provide a method and device for controlling a rotating speed of a fan in an electronic device, for at least solving the above problems.

According to an embodiment of the present disclosure, a method according to claim 1 is provided.

In an exemplary embodiment, the preset parameter value includes at least one of the followings: a first temperature point which is used for triggering the fan to stop rotating at a specified temperature point, a second temperature point which is used for triggering the fan to stop rotating at a specified temperature point in a temperature dropping process, a third temperature point which is used for triggering the fan to start at a specified temperature point in a temperature rising process, a fourth temperature point which is used for triggering the fan to run at the lowest rotating speed, and a fifth temperature point which is used for triggering the fan to run at a highest rotating speed.

In an exemplary embodiment, the step that the rotating speed of the fan is adjusted according to a comparison result includes at least one of the followings: when the second temperature value is not greater than the first temperature point, the rotating speed of the fan is adjusted to 0 or a minimum rotating speed value; when the second temperature value is greater than the first temperature point, if a current process is a temperature dropping process and the second temperature value is less than the second temperature point, the rotating speed of the fan is adjusted to 0 or the minimum rotating speed value; when the second temperature value is less than the third temperature point or the fourth temperature point, if a current process is a temperature rising process, the rotating speed of the fan is adjusted to 0 or the minimum rotating speed value; when the second temperature value is greater than the fifth temperature point, the rotating speed of the fan is adjusted to the maximum rotating speed value.

In an exemplary embodiment, the preset parameter value includes: a sixth temperature point which is used for triggering an alarm. When the second temperature value is greater than the sixth temperature point, an alarm is given.

In an exemplary embodiment, the step that the rotating speed of the fan is adjusted includes that: when the second temperature value falls in a value interval between the fourth temperature point and the fifth temperature point, a preset target temperature value is obtained; when the second temperature value reaches the preset target temperature value, the rotating speed of the fan is adjusted to keep the temperature value at the preset target temperature value or in an allowable fluctuation range of the preset target temperature value.

In an exemplary embodiment, the method may further include that: a running state of each fan in a specified group of fans is monitored; when it is monitored that running states of one or more fans in the specified group of fans are abnormal, rotating speeds of fans except the one or more fans whose running states are abnormal in the group of fans are adjusted according to an abnormality type, wherein the abnormality type includes: abnormal increase of the rotating speed, abnormal decrease of the rotating speed or stop of rotating of the fan.

In an exemplary embodiment, after adjusting the rotating speed of the fan, the method includes that: when a change value of the current first temperature value collected in a second preset time period is greater than a second preset threshold, the rotating speed of the fan is readjusted.

According to another embodiment of the present disclosure, a device for controlling a rotating speed of a fan in an electronic device according to claim 8 is provided.

By adopting the technical means in the embodiments of the present disclosure, the rotating speed of the fan is readjusted when the change value of the collected temperature value in the preset time period is greater than the preset threshold, the technical problem in the related art that the rotating speed experiences rebound or vibration in a heat dissipation process of a speed adjustable fan can be solved, the steady running of the fan is ensured to a certain degree and the service life of the fan is prolonged.

## Brief Description of the Drawings

The accompanying drawings described here are used for providing a deeper understanding of the embodiments of the present disclosure, and constitute a part of the application. Schematic embodiments of the present disclosure and description thereof are used for illustrating the present disclosure rather than forming an improper limit to the present disclosure. In the accompanying drawings:

Fig. 1 is a flowchart of a method for controlling a rotating speed of a fan in an electronic device according to an embodiment of the present disclosure;

Fig. 2 is a flowchart of a method for controlling a rotating speed of a fan according to an exemplary embodiment of the present disclosure;

Fig. 3 is a curve of adjustment of the rotating speed of a fan for preventing vibration according to an exemplary embodiment of the present disclosure;

Fig. 4 is a structure diagram of a vibration-preventing device for adjusting the rotating speed of a fan according to an exemplary embodiment of the present disclosure;

Fig. 5 is a schematic diagram of parameters for adjusting the rotating speed of a fan according to an exemplary embodiment of the present disclosure;

Fig. 6 is a schematic diagram of a constant temperature trend under a condition that a target temperature is set according to an exemplary embodiment of the present disclosure;

Fig. 7 is a structure diagram of a device for controlling a rotating speed of a fan in an electronic device used for implementing the method in Fig. 1; and

Fig. 8 is another structure diagram of the device for controlling a rotating speed of a fan in an electronic device used for implementing the method in Fig. 1.

## Detailed Description of the Embodiments

The present disclosure is described below with reference to the accompanying drawings and embodiments in detail. It is important to note that the embodiments of the present disclosure and the characteristics in the embodiments can be combined under the condition of no conflicts.

The following solution is provided to achieve the following purposes: when a speed adjustable fan is used for dissipating heat and cooling, it is possible to prevent the rotating speed of the fan from vibrating and reduce noise and power consumption of the system; especially when a certain fan is in fault, other fans can coordinate the rotating speed and switch flexibly according to user's needs, so that the device is controlled, by change of the rotating speed of the fan, at a constant temperature set by the user. The solution is descried in detail as follows.

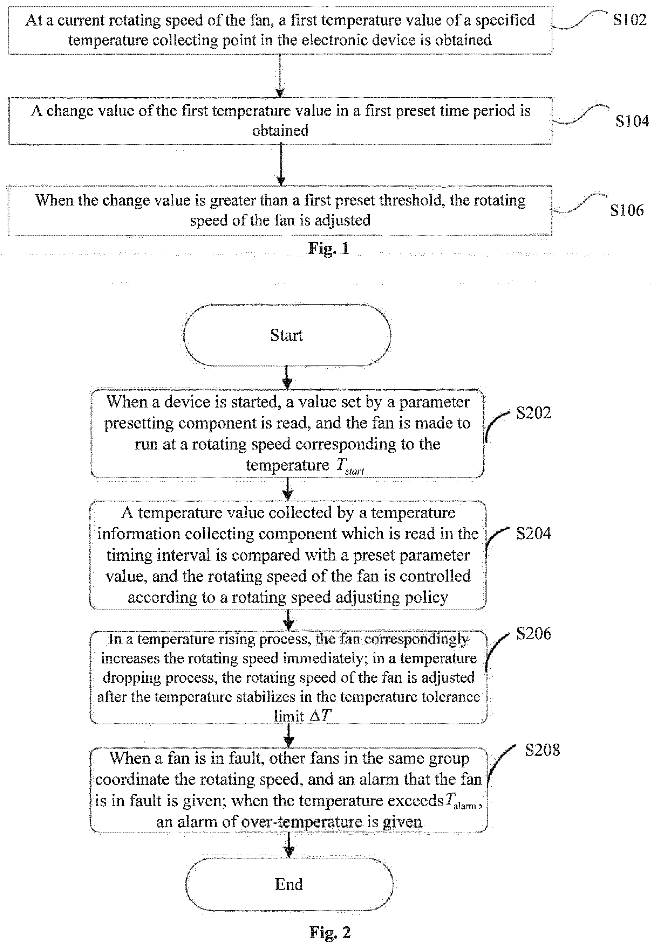

Fig. 1 is a flowchart of a method for controlling a rotating speed of a fan in an electronic device according to the invention. As shown in Fig. 1, the method includes: Step S102 to Step S106.

Step S102: at a current rotating speed of the fan, a first temperature value of a specified temperature collecting point in the electronic device is obtained.

Step S104: a change value of the first temperature value in a first preset time period is obtained.

Step S106: when the change value is greater than a first preset threshold, the rotating speed of the fan is adjusted.

According to the invention, before Step S102, the following process is performed: fans in the electronic device are divided into groups, wherein each group of fans corresponds to multiple temperature collecting points; and a temperature collecting point with a maximum temperature value is used as the specified temperature collecting point.

According to the invention, adjusting the rotating speed of the fan includes that: a preset parameter value is compared with a second temperature value which is obtained based on the change value and the first temperature value, wherein the preset parameter value is used for indicating a critical temperature point of adjusting the rotating speed of the fan; and the rotating speed of the fan is adjusted according to a comparison result.

In the present embodiment, adjusting the rotating speed of the fan according to the comparison result may actually be implemented by adjusting the rotating speed of the fan by comparing the second temperature value with the first temperature point, the second temperature point, the third temperature point, the fourth temperature point and the fifth temperature point, for example:

1. when the second temperature value is not greater than the first temperature point, the rotating speed of the fan is adjusted to 0 or a minimum rotating speed value;

2. when the second temperature value is greater than the first temperature point, if a current process is a temperature dropping process and the second temperature value is less than the second temperature point, the rotating speed of the fan is adjusted to 0 or the minimum rotating speed value;

3. when the second temperature value is less than the third temperature point or the fourth temperature point, if a current process is a temperature rising process, the rotating speed of the fan is adjusted to 0 or the minimum rotating speed value;

4. when the second temperature value is greater than the fifth temperature point, the rotating speed of the fan is adjusted to the maximum rotating speed value.

In the process of adjusting the rotating speed of the fan, the rotating speed of the fan may be adjusted to 0 or the minimum rotating speed value or the maximum rotating speed value. Note that, the minimum rotating speed value and the maximum rotating speed value can be set flexibly, which is not limited by the embodiment of the present disclosure.

In an exemplary embodiment, the preset parameter value may include at least one of the followings: a first temperature point which is used for triggering the fan to stop rotating at a specified temperature point, a second temperature point which is used for triggering the fan to stop rotating at a specified temperature point in a temperature dropping process, a third temperature point which is used for triggering the fan to start at a specified temperature point in a temperature rising process, a fourth temperature point which is used for triggering the fan to run at the lowest rotating speed, and a fifth temperature point which is used for triggering the fan to run at a highest rotating speed.

Note that, the preset parameter value may further include: a sixth temperature point which is used for triggering an alarm. The method may further include that: when the second temperature value is greater than the sixth temperature point, an alarm is given.

In a specific implementation process, the embodiment of the present disclosure may also adjust the rotating speed of the fan to keep the rotating speed in a stable range, and the specific process may be implemented as follows: when the second temperature value falls in a value interval between the fourth temperature point and the fifth temperature point, a preset target temperature value is obtained; when the second temperature value reaches the preset target temperature value, the rotating speed of the fan is adjusted to keep the temperature value at the preset target temperature value or in an allowable fluctuation range of the preset target temperature value.

In the present embodiment, because fans in the electronic device may be divided into groups before the first temperature value of the specified temperature collecting point in the electronic device is obtained, the method may further include that: a running state of each fan in a specified group of fans is monitored; when it is monitored that running states of one or more fans in the specified group of fans are abnormal, rotating speeds of fans except the one or more fans whose running states are abnormal in the group of fans are adjusted according to an abnormality type, wherein the abnormality type includes: abnormal increase of the rotating speed, abnormal decrease of the rotating speed or stop of rotating of the fan.

A further improvement of the above technical solution made by the embodiment of the present disclosure is that: after adjusting the rotating speed of the fan, when a change value of the current first temperature value collected in a second preset time period is greater than a second preset threshold, the rotating speed of the fan is readjusted.

By means of the above steps in the embodiments or exemplary embodiments of the present disclosure, the technical means of readjusting the rotating speed of the fan when the change value of the collected temperature value in the preset time period is greater than the preset threshold solves the technical problem in the related art that the rotating speed may experience rebound or vibration in the heat dissipation process of a speed adjustable fan, the steady running of the fan is ensured to a certain degree and the service life of the fan is prolonged. When the temperature collected in a timing interval changes, the rotating speed of the fan is adjusted after stabilizing within a range (a temperature tolerance limit $\Delta T$), which effectively prevents the rotating speed of the fan from rebounding and vibrating. By further settings, the fan can also be controlled to run at a constant temperature. At the same time, the rotating speed of the fan is controlled intelligently based on preset parameters and measures for processing failures of the fan, thereby achieving the purpose of cooling and protecting chips, reducing the rotating speed noise of the fan, and ensuring the safety and stability during running of the device.

To understand the process of adjusting the rotating speed of the fan in the above embodiment better, an illustration is given below in combination with an exemplary embodiment.

Fig. 2 is a flowchart of a method for controlling a rotating speed of a fan according to an exemplary embodiment of the present disclosure. As shown in Fig. 2, the flow of the method includes the following steps.

Step S202: when a device is started, first a temperature value set by the system is read, and the fan is made to run at a rotating speed corresponding to the temperature $T_{start}$, that is, an initial rotating speed is set for the fan, wherein the temperature $T_{start}$ corresponds to the second temperature point in the above embodiment.

Step S204: after the device is started, the timer runs, a temperature value collected by a temperature information collecting component which is read in the timing interval is compared with the preset parameter value, and the rotating speed of the fan is controlled according to a rotating speed adjusting policy.

Step S206: when the temperature rises or drops, the rotating speed of the fan is adjusted after stabilizing in the temperature tolerance limit $\Delta T$ to prevent the rotating speed of the fan from rebound and vibration.

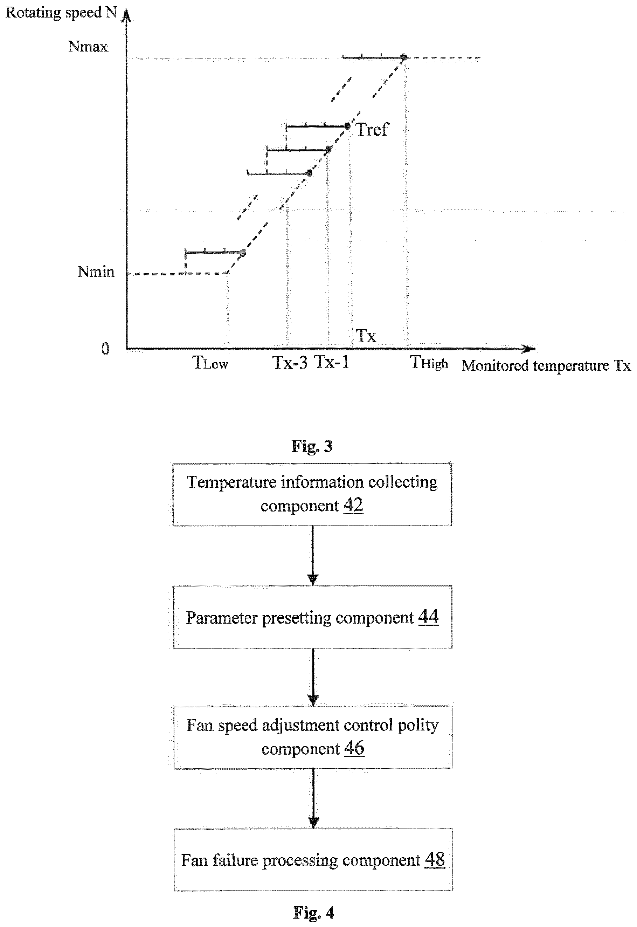

Fig. 3 is a curve of adjustment of the rotating speed of a fan for preventing vibration according to an exemplary embodiment of the present disclosure. In Fig. 3, firstly, the dotted line is a rotating speed adjusting curve, and the full line is a temperature tolerance limit $\Delta T$ curve. Secondly, at any moment, the position of the current state on the rotating speed adjusting curve may only be determined according to both a monitoring point temperature value $T_x$ (an abscissa value) and a reference temperature value $T_{ref}$ (a dotted line position). At a certain moment, a monitored temperature point (abscissa) may correspond to multiple rotating speed points (ordinate) on the rotating speed adjusting curve, for example, there are 3 rotating speed points in Fig. 3. The rotating speed changes only when the reference temperate value $T_{ref}$ changes. Thirdly, in the rotating speed adjusting policy, when the temperature changes (rises or drops), the rotating speed of the fan changes only after the state point reaches the end of the blue line, so as to prevent the rotating speed of the fan from rebound and vibration.

Step S208: when a fan is in fault, other fans in the same group coordinate the rotating speed, that is, increase the rotating speed of the fan fast or postpone or more slowly reduce the rotating speed of the fan, so as to cool the system preferentially and give an alarm that the fan is in fault. When the temperature exceeds a temperature point $T_{alarm}$, an alarm of exceeding the temperature is given, wherein $T_{alarm}$ corresponds to the sixth temperature point in the above embodiment.

Note that, the steps shown in the flowchart of the above embodiment can be performed in devices, such as a Digital Subscriber Line Access Multiplexer (DSLAM) of a Digital Subscriber Line (DSL) and a Passive Optical Network (PON). In addition, although a logical order is shown in the flowchart, in some cases, the presented or described steps can be performed in an order different from that described here.

To understand the method for adjusting the rotating speed of the fan in the above exemplary embodiment better, a vibration-preventing device for adjusting the rotating speed of the fan is also provided in another embodiment, which is used for implementing the above embodiments and exemplary implementations, those having been illustrated will not be repeated here. The components involved in the device are illustrated below. For example, the term "component" may be a combination of software and/or hardware capable of implementing expected functions. Although the device described in the following embodiment is implemented by software preferably, the implementation through hardware or the combination of software and hardware is possible and conceived. Fig. 4 is a structure diagram of a vibration-preventing device for adjusting the rotating speed of a fan according to an exemplary embodiment of the present disclosure. As shown in Fig. 4, the device includes:

a temperature information collecting component 42, a parameter presetting component 44, a fan speed adjustment control polity component 46, and a fan failure processing component 48. The structure is described in detail below.

The temperature information collecting component 42 is configured to monitor the temperature of a sensitive area. The temperature collected in the timing interval is compared with the value set by the parameter presetting component 44, and then the rotating speed of the fan is controlled by the fan speed adjustment control polity component 46. The fan failure processing component 48 is configured to compare the collected current rotating speed of the group of fans with the target rotating speed. If the difference between the target rotating speed and the collected rotating speed is greater than a preset threshold, it is determined that the fan is in fault. When the fan is in fault, other fans run synergistically, and an alarm that the fan is in fault is given. The group of fans includes at least one fan.

To understand functions of the above components better, the functions of the components are described below in detail.

The temperature information collecting component 42 is configured to collect the temperature of the temperature sensitive area. Multiple temperature collecting points may be set on a device to be detected, and the temperature collecting point with the maximum temperature value is used as a computing trigger point. For a communication device, usually the temperature points of a main control board and line card are collected.

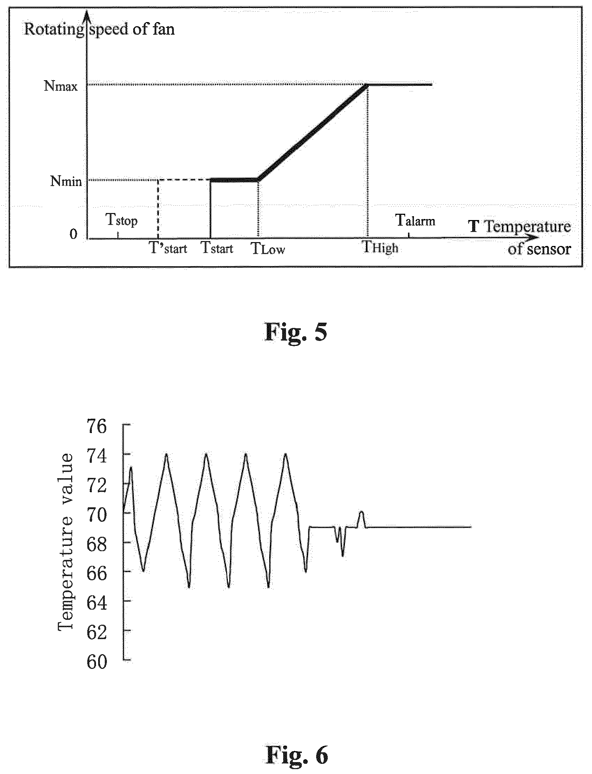

The parameter presetting component 44 is configured to set a temperature point at which the fan stops rotating, a temperature point at which the fan starts rotating in the temperature rising process, a temperature point at which the fan starts rotating in the temperature dropping process, a temperature point at which the fan is at the lowest rotating speed, a temperature point at which the fan is at a highest rotating speed, an alarm temperature point, the minimum rotating speed value of the fan, the maximum rotating speed of the fan, an error threshold of the rotating speed of the fan, and a temperature tolerance limit $\Delta T$. As shown in Fig. 5, the preset parameter values include: the temperature point at which the fan stops rotating, the temperature point at which the fan starts rotating in the temperature rising process, the temperature point at which the fan starts rotating in the temperature dropping process, the temperature point at which the fan is at the lowest rotating speed, the temperature point at which the fan is at the highest rotating speed, the alarm temperature point, the minimum rotating speed value of the fan, the maximum rotating speed of the fan, the error threshold of the rotating speed of the fan, and the temperature tolerance limit $\Delta T$. These preset parameter values have default values, or they can be configured through commands.

The fan speed adjustment control polity component 46 includes two working modes, i.e., automatic speed adjustment and manual speed adjustment. During the manual speed adjustment, multiple speed adjusting levels are set by percentage according to the rotating speed corresponding to the maximum power of the fan, for example, levels from 0 to 7 can be set. The level 0 represents stop of rotation, the level 1 represents 35% of the highest rotating speed, the level 2 represents 64% of the highest rotating speed, the level 3 represents 57% of the highest rotating speed, the level 4 represents 65% of the highest rotating speed, the level 5 represents 76% of the highest rotating speed, the level 6 represents 87% of the highest rotating speed, and the level 7 represents 100% of the highest rotating speed. During the automatic speed adjustment, the temperature rising process and the temperature dropping process are implemented differently. When the collected temperature is lower than or equal to the preset temperature point (which is equivalent to the first temperature point in the above embodiment) at which the fan stops rotating, the fan stops rotating. When the temperature is higher than the temperature point at which the fan stops rotating, if the current process is the temperature dropping process and the temperature is lower than a temperature point $T'_{start}$ (which is equivalent to the second temperature point in the above embodiment) at which the fan starts rotating in the temperature dropping process, the fan stops rotating. If the current process is the temperature rising process and the temperature is lower than the temperature point $T_{start}$ (which is equivalent to the third temperature point in the above embodiment) at which the fan starts rotating in the temperature rising process or the temperature is lower than the temperature point $T_{low}$ (which is equivalent to the fourth temperature point in the above embodiment) at which the fan is at the lowest rotating speed value $N_{min}$, the fan runs at the minimum rotating speed value. When the temperature is higher than the temperature point $T_{high}$ (which is equivalent to the fifth temperature point in the above embodiment) at which the fan is at a highest rotating speed, the fan runs at the maximum rotating speed value $N_{max}$. When the temperature is higher than the alarm temperature point $T_{alarm}$ (which is equivalent to the sixth temperature point in the above embodiment), an alarm should be given. When the temperature is in a speed adjusting interval from $T_{low}$ to $T_{high}$ and the temperature collected in the timing interval rises or drops, the rotating speed of the fan may not be adjusted immediately, and the rotating speed of the fan is adjusted up or down by a rotating speed equivalent of the fan corresponding to the temperature only after the temperature stabilizes at a range value (the temperature tolerance limit $\Delta T$), so as to prevent the rotating speed of the fan from rebound.

Further, in the above rotating speed adjusting policy, when the temperature is in a speed adjusting interval, a target temperature value $T_{target}$ may be configured, and the monitored temperature is kept within a range of the target temperature value $\pm \Delta T$ by automatically controlling the rotating speed of the fan, so that the device can be controlled to operate at a constant temperature.

When it is intelligently judged that the fan is in fault, the fan failure processing component 48 is configured to, when the temperature collected by the fan control device is higher than the temperature collected in the previous timing interval, try to increase the rotating speed of other fans in the same group by 2 levels based on the level corresponding to the current temperature, and if the temperature continues rising, directly adjust the rotating speed of the other fans to the highest rotating speed level. The fan failure processing component 48 is further configured to, when the collected temperature is lower than the temperature collected in the previous timing interval, namely in the temperature dropping process, decrease the rotating speed of the group of fans step by step. When it is judged that the fan is in fault, alarm information that the fan is in fault should be generated. The method for intelligently judging that the fan is in fault includes that: the rotating speed of each fan in the group of fans is collected and compared with the target rotating speed; when the difference between the target rotating speed and the collected rotating speed is greater than the preset threshold, it is judged that the fan is in fault.

Further, in the fan control policy, the device can be controlled to operate at a set constant target temperature by means of the automatic adjustment of the rotating speed of the fan. For example, as shown in Fig. 6, in a trend curve in which the device is controlled to operate in the constant temperature 69 degree centigrade, the temperature fluctuates at first and trends to stable later. After the temperature is stable, the rotating speed of the fan trends to be stable.

To understand the implementation process of each component better, an illustration is given in combination with the following flow.

An exemplary embodiment of the present disclosure also provides a vibration-preventing method for adjusting the rotating speed of a fan. Specifically, the vibration-preventing method for adjusting the rotating speed of a fan includes that:

the temperature information collecting component 42 reads a temperature value of the temperature sensitive area of the device to be detected and sends the temperature value to the fan speed adjustment control polity component 46;
the fan speed adjustment control polity component 46 obtains the collected temperature value and controls the rotating speed of the fan according to the rotating speed adjusting policy.

When the fan failure processing component 48 intelligently judges the failures of the fan, other fans run synergistically.

The algorithm implementation of the control policy for fan speed adjustment is described in detail as follows.

Definition: the relationship between the rotating speed and temperature is $N_x = RPM(T_x)$, as shown in a dotted linear rotating speed adjusting curve in Fig. 3, then

$$RPM(T_X) = \begin{cases} 0\% & when: T_x < T_{start} \\ N_{MIN} & when: T_{start} \le T_x \le T_{Low} \\ N_{MAX} & when: T_x \ge T_{High} \\ N_{MIN} + (N_{MAX} - N_{MIN}) \cdot (T_x - T_{Low})/(T_{High} - T_{Low}) & when: T_{Low} \le T_x \le T_{High} \end{cases}$$

where, the variable $RPM$ represents the rotating speed, and the variable $T_x$ represents the temperature fed back by the temperature sensor.

A storage variable is set for storing the reference temperature $T_{ref}$, the $T_{ref}$ is initialized to be equal to $T_{low}$, the constant $\Delta T$ is set to 3 (the temperature tolerance), the rotating speed $RPM$ is initialized to be equal to $N_{Min}$, at a moment t which is at a certain point on the rotating speed adjusting curve, the temperature fed back by the temperature sensor is $T_x^t$, the reference temperature is $T_{ref}^t$, and the rotating speed is $RPM^t = RPM(T_{ref}^t)$.

At a moment t+1, the read temperature value monitored by the temperature sensor is $T_x^{t+1}$, it is judged:

1. if $T_x^{t+1} > T_{ref}^t$, then the rotating speed is $RPM(T_x^{t+1})$, the reference temperature is set to $T_{ref}^{t+1} = T_x^{t+1}$, that is, the rotating speed is adjusted according to the dotted linear curve;

2. if $T_x^{t+1} \le T_{ref}^t$, then it is judged whether the difference between the $T_x^{t+1}$ and the $T_{ref}^t$ reaches the temperature tolerance limit $\Delta T$;

2a. if $(T_{ref}^t - T_x^{t+1}) < \Delta T$, then the reference temperature is set to $T_{ref}^{t+1} = T_{ref}^t$, the rotating speed is set to $RPM^{t+1} = RPM(T_{ref}^{t+1})$, that is, the rotating speed remains unchanged;

2b. if $(|T_{ref}^t - T_x^{t+1}|) \ge \Delta T$, $\Delta T$, then the reference temperature is set to $T_{ref}^{t+1} = T_{ref}^t - \Delta T$ (in the temperature dropping process) or $T_{ref}^{t+1} = T_{ref}^t + \Delta T$ (in the temperature rising process), and turn to 1 to adjust the rotating speed.

Note that, the temperature variables $T_x$ and $T_{ref}$ are integer values. It can be seen that when the rotating speed remains constant, the reference temperature $T_{ref}$ is unchanged; when the rotating speed is about to change, the value of $T_{ref}$ is set to be equal to $\pm \Delta T$. The constant $\Delta T$ is the temperature tolerance, which is usually set to 2-6 degree centigrade according to the adjustable temperature range. In the above example, the $\Delta T$ is equal to 3 degree centigrade. The time interval between the moment t and t+1 is not just 1 second, but may be 10 seconds, 30 seconds, 60 seconds, and so on, depending on the actual effect.

By means of the embodiments of the present disclosure, when the temperature collected in the timing interval changes, the rotating speed of the fan is adjusted after stabilizing in a range (the temperature tolerance limit $\Delta T$), which effectively prevents the rotating speed of the fan from rebound and vibration. By further settings, the fan can be controlled to run at a constant target temperature $T_{t\,arg\,et}$. At the same time, the rotating speed of the fan is controlled intelligently based on preset parameters and measures for processing failures of the fan, thereby achieving the purpose of cooling and protecting chips, reducing the rotating speed noise of the fan, and ensuring the safety and stability during running of the device.

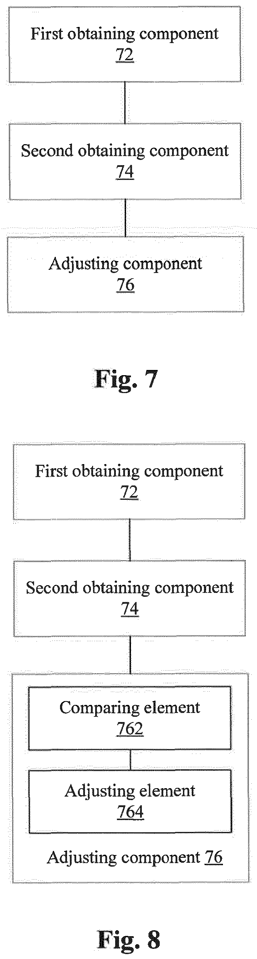

A device for controlling a rotating speed of a fan in an electronic device is also provided in an embodiment of the present embodiment, which is used for implementing the above embodiments and exemplary implementations; those having been illustrated will not be repeated here. The components involved in the device are illustrated below. For example, the term "component" may be a combination of software and/or hardware capable of implementing expected functions. Although the device described in the following embodiment is implemented by software in an exemplary embodiment, the implementation through hardware or the combination of software and hardware is possible and conceived. Fig. 7 is a structure diagram of a device for controlling a rotating speed of a fan in an electronic device used for implementing the method in Fig. 1. As shown in Fig. 7, the device includes:

a first obtaining component 72, which is configured to, at a current rotating speed of the fan, obtain the first temperature value of the specified temperature collecting point in the electronic device;
a second obtaining component 74, which is coupled with the first obtaining component 72 and configured to obtain the change value of the first temperature value in the preset time period; and
an adjusting component 76, which is coupled with the second obtaining component 74 and configured to adjust the rotating speed of the fan when the change value is greater than the first preset threshold.

As shown in Fig. 8, the adjusting component 76 includes: a comparing element 762, which is configured to compare the preset parameter value with the second temperature value which is obtained based on the change value and the first temperature value, wherein the preset parameter value is used for indicating the critical temperature point of adjusting the rotating speed of the fan; and an adjusting element 764, which is coupled with the comparing element 762 and configured to adjust the rotating speed of the fan according to a comparison result.

A further improvement of the above technical solution made by the embodiment of the present disclosure is that: after the adjusting component 76 adjusts the rotating speed of the fan, when a change value of the first temperature value collected in the second preset time period is greater than a second preset threshold, the rotating speed of the fan is readjusted.

Note that, in the embodiment of the present disclosure, the first obtaining component 72 and the second obtaining component 74 are equivalent to, but are not limited to, the temperature information collecting component 42 in the above exemplary embodiment. The adjusting component 76 is equivalent to, but is not limited to, the fan speed adjustment control polity component 46 in the above exemplary embodiment.

By means of the combined action of the components in the embodiments of the present disclosure, the rotating speed of the fan is readjusted when the change value of the collected temperature value in the preset time period is greater than the preset threshold, as a result, the technical problem in the related art that the rotating speed may experience rebound or vibration in the heat dissipation process of a speed adjustable fan can be solved, the steady running of the fan is ensured to a certain degree and the service life of the fan is prolonged. When the temperature collected in the timing interval changes, the rotating speed of the fan is adjusted after stabilizing in a range (the temperature tolerance limit $\Delta T$), which effectively prevents the rotating speed of the fan from rebound and vibration. By further settings, the fan can be controlled to run at a constant target temperature $T_{target}$. At the same time, the rotating speed of the fan is controlled intelligently based on preset parameters and measures for processing failures of the fan, thereby achieving the purpose of cooling and protecting chips, reducing the rotating speed noise of the fan, and ensuring the safety and stability during running of the device.

To sum up, by means of the embodiments of the present disclosure, the problem that the rotating speed of the fan experiences rebound or vibration when being adjusted can be solved, and the device can be controlled to operate at a relatively constant temperature, thereby improving the flexibility of cooling by the fan and ensuring the stable running and service life of the fan. The method of the embodiments and exemplary embodiments of the present disclosure can be applied to access devices, such as DSLAM or PON, without high requirements for the devices. The algorithm of the fan control policy is not complex and fully operable.

In addition, considering that the method adopted in the related art for controlling a rotating speed of the fan to cool by setting multiple monitored temperature points and finely setting fan levels with a small step size can only be used in a good environment where the temperature fluctuates slightly, and the rotating speed of the fan is prone to experience rebound and vibration when the environment temperature fluctuates greatly or the rotating speed is adjusted finely according to the small step size, the embodiments of the present disclosure provide a vibration-preventing solution for adjusting the rotating speed of the fan more precisely which adopts the rotating speed adjusting policy properly to dissipate heat effectively to ensure the safe running of the system while preventing the rotating speed of the fan from vibrating and reducing the noise.

Obviously, those skilled in the art should appreciate that the above components and steps of the present disclosure can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; and in some situations, the presented or described steps can be executed in an order different from that described here; or they are made into integrated circuit components, respectively; or multiple components and steps of them are made into a single integrated circuit component to realize. In this way, the present disclosure is not limited to any particular combination of hardware and software.

The above is only the exemplary embodiments of the present disclosure and not intended to limit the present disclosure. For those skilled in the art, the present disclosure may have various modifications and changes. Any modifications, equivalent replacements, improvements and the like within the principle of the present disclosure shall fall within the scope of the claims of the present invention.

### Industrial Applicability

The technical solutions provided by the embodiments of the present disclosure can be applied to the process of controlling a fan of an electronic device. By adopting the technical means of readjusting the rotating speed of the fan when the change value of the collected temperature value in the preset time period is greater than the preset threshold, the technical problem in the related art that the rotating speed may experience rebound or vibration in the heat dissipation process of a speed adjustable fan can be solved, the steady running of the fan is ensured to a certain degree and the service life of the fan is prolonged.

### Claims

**1.** A method for controlling a rotating speed of a fan in an electronic device comprising multiple fans, comprising:

at a current rotating speed of the fan, obtaining a first temperature value of a specified temperature collecting point in the electronic device (S102);
obtaining a change value of the first temperature value in a first preset time period (S104); and
when the change value is greater than a first preset threshold, adjusting the rotating speed of the fan (S106); wherein adjusting the rotating speed of the fan comprises: comparing a preset parameter value with a second temperature value which is obtained based on the change value and the first temperature value, wherein the preset parameter value is used for indicating a critical temperature point of adjusting the rotating speed of the fan; and adjusting the rotating speed of the fan according to a comparison result;
wherein before obtaining the first temperature value of the specified temperature collecting point in the electronic device, the method comprises:

dividing the multiple fans in the electronic device into groups, wherein each group of fans corresponds to multiple temperature collecting points; and
using from the multiple temperature collecting points corresponding to the group to which the fan which is controlled belongs, the temperature collecting point with a maximum temperature value as the specified temperature collecting point.

**2.** The method as claimed in claim 1, wherein the preset parameter value comprises at least one of the followings: a first temperature point which is used for triggering the fan to stop rotating at a specified temperature point, a second temperature point which is used for triggering the fan to stop rotating at a specified temperature point in a cooling process, a third temperature point which is used for triggering the fan to start at a specified temperature point in a temperature rising process, and a fifth temperature point which is used for triggering the fan to run at a highest rotating speed.

3. The method as claimed in claim 2, wherein adjusting the rotating speed of the fan according to the comparison result comprises at least one of the followings:

when the second temperature value is not greater than the first temperature point, adjusting the rotating speed of the fan to 0 or a minimum rotating speed value;
when the second temperature value is greater than the first temperature point, if a current process is the temperature dropping process and the second temperature value is less than the second temperature point, adjusting the rotating speed of the fan to 0 or the minimum rotating speed value;
when the second temperature value is less than the third temperature point or the fourth temperature point, if a current process is the temperature rising process, adjusting the rotating speed of the fan to 0 or the minimum rotating speed value; and
when the second temperature value is greater than the fifth temperature point, adjusting the rotating speed of the fan to the maximum rotating speed value.

4. The method as claimed in claim 2, wherein the preset parameter value comprises: a sixth temperature point which is used for triggering an alarm; and the method further comprises: when the second temperature value is greater than the sixth temperature point, giving an alarm.

5. The method as claimed in claim 2, wherein adjusting the rotating speed of the fan comprises:

when the second temperature value falls in a value interval between the fourth temperature point and the fifth temperature point, obtaining a preset target temperature value; and
when the second temperature value reaches the preset target temperature value, adjusting the rotating speed of the fan to keep the temperature value at the preset target temperature value or in an allowable fluctuation range of the preset target temperature value.

6. The method as claimed in claim 1, further comprising:

monitoring a running state of each fan in a specified group of fans; and
when it is monitored that running states of one or more fans in the specified group of fans are abnormal, adjusting rotating speeds of fans except the one or more fans whose running states are abnormal in the group of fans according to an abnormality type, wherein the abnormality type comprises: abnormal increase of the rotating speed, abnormal decrease of the rotating speed or stop of rotating of the fan.

7. The method as claimed in any one of claims 1 to 6 after adjusting the rotating speed of the fan, comprising:
when a change value of the current first temperature value collected in a second preset time period is greater than a second preset threshold, readjusting the rotating speed of the fan.

8. A device for controlling a rotating speed of a fan in an electronic device comprising multiple fans, comprising
a first obtaining component (72), which is configured to, at a current rotating speed of the fan, obtain a first temperature value of a specified temperature collecting point in the electronic device;
a second obtaining component (74), which is configured to obtain a change value of the first temperature value in a preset time period; and
an adjusting component (76), which is configured to execute a control method according to any of the claims 1 to 7.

**Patentansprüche**

1. Verfahren zur Steuerung einer Drehgeschwindigkeit eines Lüfters in einer elektronischen Vorrichtung, die mehrere Lüfter aufweist, umfassend:

bei einer aktuellen Drehgeschwindigkeit des Lüfters, Erhalten eines ersten Temperaturwertes eines spezifizierten Temperaturerfassungspunktes in der elektronischen Vorrichtung (S102);
Erhalten eines Änderungswertes des ersten Temperaturwertes in einem ersten vorgegebenen Zeitraum (S104); und
wenn der Änderungswert höher als eine erste vorgegebene Schwelle ist, Einstellen der Drehgeschwindigkeit des Lüfters (S106);

worin das Einstellen der Drehgeschwindigkeit des Lüfters umfasst: Vergleichen eines vorgegebenen Parameterwertes mit einem zweiten Temperaturwert, der aufgrund des Änderungswertes und des ersten Temperaturwertes erhalten wird, worin der vorgegebene Parameterwert verwendet wird, um einen kritischen Temperaturpunkt des Einstellens der Drehgeschwindigkeit des Lüfters anzugeben; und Einstellen der Drehgeschwindigkeit des Lüfters gemäß einem Vergleichsergebnis;

worin vor dem Erhalten des ersten Temperaturwertes des spezifizierten Temperaturerfassungspunktes in der elektronischen Vorrichtung das Verfahren umfasst:

Einteilen der mehreren Lüfter in der elektronischen Vorrichtung in Gruppen, worin jede Gruppe von Lüftern mehreren Temperaturerfassungspunkten entspricht; und

Benutzen, von den mehreren Temperaturerfassungspunkten, die der Gruppe entsprechen, zu der der Lüfter, der gesteuert wird, gehört, des Temperaturerfassungspunktes mit einem maximalen Temperaturwert als den spezifizierten Temperaturerfassungspunkt.

2.  Verfahren nach Anspruch 1, worin der vorgegebene Parameterwert zumindest einen von den folgenden umfasst: einen ersten Temperaturpunkt, der benutzt wird, um den Lüfter auszulösen, damit er bei einem spezifizierten Temperaturpunkt aufhört, sich zu drehen, einen zweiten Temperaturpunkt, der benutzt wird, um den Lüfter auszulösen, damit er bei einem spezifizierten Temperaturpunkt in einem Kühlprozess aufhört, sich zu drehen, einen dritten Temperaturpunkt, der benutzt wird, um den Lüfter auszulösen, damit er bei einem spezifizierten Temperaturpunkt in einem Temperaturanstiegsprozess anläuft, und einen fünften Temperaturpunkt, der benutzt wird, um den Lüfter auszulösen, damit er bei einer höchsten Drehgeschwindigkeit läuft.

3.  Verfahren nach Anspruch 2, worin das Einstellen der Drehgeschwindigkeit des Lüfters gemäß dem Vergleichsergebnis zumindest eines von den folgenden umfasst:

wenn der zweite Temperaturwert nicht höher als der erste Temperaturpunkt ist, Einstellen der Drehgeschwindigkeit des Lüfters auf 0 oder auf einen minimalen Drehgeschwindigkeitswert;

wenn der zweite Temperaturwert höher als der erste Temperaturpunkt ist, wenn ein aktueller Prozess der Temperaturabfallprozess ist und der zweite Temperaturwert kleiner als der zweite Temperaturpunkt ist, Einstellen der Drehgeschwindigkeit des Lüfters auf 0 oder auf den minimalen Drehgeschwindigkeitswert;

wenn der zweite Temperaturwert kleiner als der dritte Temperaturpunkt oder der vierte Temperaturpunkt ist, wenn ein aktueller Prozess der Temperaturanstiegsprozess ist, Einstellen der Drehgeschwindigkeit des Lüfters auf 0 oder auf den minimalen Drehgeschwindigkeitswert; und

wenn der zweite Temperaturwert höher als der fünfte Temperaturpunkt ist, Einstellen der Drehgeschwindigkeit des Lüfters auf den maximalen Drehgeschwindigkeitswert.

4.  Verfahren nach Anspruch 2, worin der vorgegebene Parameterwert umfasst: einen sechsten Temperaturpunkt, der benutzt wird, um einen Alarm auszulösen; und das Verfahren ferner umfasst: wenn der zweite Temperaturwert höher als der sechste Temperaturpunkt ist, Geben eines Alarms.

5.  Verfahren nach Anspruch 2, worin das Einstellen der Drehgeschwindigkeit des Lüfters umfasst:

wenn der zweite Temperaturwert unter einen Wertbereich zwischen dem vierten Temperaturpunkt und dem fünften Temperaturpunkt fällt, Erhalten eines vorgegebenen Zieltemperaturwertes; und

wenn der zweite Temperaturwert den vorgegebenen Zieltemperaturwert erreicht, Einstellen der Drehgeschwindigkeit des Lüfters, um den Temperaturwert auf den vorgegebenen Zieltemperaturwert oder in einem zulässigen Schwankungsbereich des vorgegebenen Zieltemperaturwertes zu halten.

6.  Verfahren nach Anspruch 1, ferner umfassend:

Überwachen eines Betriebszustands jedes Lüfters in einer spezifizierten Gruppe von Lüftern; und

wenn es überwacht wird, dass Betriebszustände eines oder mehrerer Lüfter in der spezifizierten Gruppe von Lüftern anormal sind, Einstellen von Drehgeschwindigkeiten von Lüftern, mit Ausnahme von dem einen oder mehreren Lüftern, dessen bzw. deren Betriebszustände anormal sind, in der Gruppe von Lüftern gemäß einem Abnormalitätstyp, worin der Abnormalitätstyp umfasst: anormalen Anstieg der Drehgeschwindigkeit, anormale Abnahme der Drehgeschwindigkeit oder Aufhören des Drehens des Lüfters.

7. Verfahren nach einem der Ansprüche 1 bis 6 nach dem Einstellen der Drehgeschwindigkeit des Lüfters, umfassend: wenn ein Änderungswert des aktuellen ersten Temperaturwertes, der in einem zweiten vorgegebenen Zeitraum erfasst wird, höher als eine zweite vorgegebene Schwelle ist, Neu-Einstellen der Drehgeschwindigkeit des Lüfters.

8. Vorrichtung zur Steuerung einer Drehgeschwindigkeit eines Lüfters in einer elektronischen Vorrichtung, die mehrere Lüfter aufweist, umfassend
eine erste Erhaltungskomponente (72), die dazu eingerichtet ist, bei einer aktuellen Drehgeschwindigkeit des Lüfters, einen ersten Temperaturwert eines spezifizierten Temperaturerfassungspunktes in der elektronischen Vorrichtung zu erhalten;
eine zweite Erhaltungskomponente (74), die dazu eingerichtet ist, einen Änderungswert des ersten Temperaturwertes in einem vorgegebenen Zeitraum zu erhalten; und
eine Einstellkomponente (76), die dazu eingerichtet ist, ein Steuerungsverfahren nach einem der Ansprüche 1 bis 7 durchzuführen.

**Revendications**

1. Procédé de commande d'une vitesse de rotation d'un ventilateur dans un dispositif électronique comprenant de multiples ventilateurs, comprenant :

   à une vitesse de rotation actuelle du ventilateur, l'obtention d'une première valeur de température d'un point de collecte de température spécifié dans le dispositif électronique (S102) ;
   l'obtention d'une valeur de changement de la première valeur de température dans une première période de temps préréglée (S104) ; et
   lorsque la valeur de changement est supérieure à un premier seuil préréglé, le réglage de la vitesse de rotation du ventilateur (S 106) ;

   où le réglage de la vitesse de rotation du ventilateur comprend : la comparaison d'une valeur de paramètre préréglée avec une seconde valeur de température qui est obtenue sur la base de la valeur de changement et de la première valeur de température, où la valeur de paramètre préréglée est utilisée pour indiquer un point de température critique de réglage de la vitesse de rotation du ventilateur ; et le réglage de la vitesse de rotation du ventilateur selon un résultat de comparaison ;
   où, avant d'obtenir la première valeur de température du point de collecte de température spécifié dans le dispositif électronique, le procédé comprend :

   la division des multiples ventilateurs dans le dispositif électronique en groupes, où chaque groupe de ventilateurs correspond à de multiples points de collecte de température ; et
   l'utilisation à partir des multiples points de collecte de température correspondant au groupe auquel appartient le ventilateur commandé, le point de collecte de température avec une valeur de température maximale en tant que point de collecte de température spécifié.

2. Procédé selon la revendication 1, où la valeur de paramètre préréglée comprend au moins l'un des éléments suivants : un premier point de température qui est utilisé pour déclencher l'arrêt de la rotation du ventilateur à un point de température spécifié, un deuxième point de température qui est utilisé pour déclencher l'arrêt de la rotation du ventilateur à un point de température spécifié dans un processus de refroidissement, un troisième point de température qui est utilisé pour déclencher le démarrage du ventilateur à un point de température spécifié dans un processus d'élévation de température, et un cinquième point de température qui est utilisé pour déclencher le fonctionnement du ventilateur à une vitesse de rotation la plus élevée.

3. Procédé selon la revendication 2, où le réglage de la vitesse de rotation du ventilateur en fonction du résultat de comparaison comprend au moins l'un des éléments suivants :

   lorsque la seconde valeur de température n'est pas supérieure au premier point de température, le réglage de la vitesse de rotation du ventilateur à 0 ou à une valeur de vitesse de rotation minimale ;
   lorsque la seconde valeur de température est supérieure au premier point de température, si un processus en cours est le processus de chute de température et que la seconde valeur de température est inférieure au second point de température, le réglage de la vitesse de rotation du ventilateur à 0 ou la valeur de vitesse de rotation minimale ;

lorsque la seconde valeur de température est inférieure au troisième point de température ou au quatrième point de température, si un processus en cours est le processus d'élévation de température, le réglage de la vitesse de rotation du ventilateur à 0 ou la valeur de vitesse de rotation minimale ; et

lorsque la seconde valeur de température est supérieure au cinquième point de température, le réglage de la vitesse de rotation du ventilateur à la valeur de vitesse de rotation maximale.

4. Procédé selon la revendication 2, où la valeur de paramètre préréglée comprend : un sixième point de température qui est utilisé pour déclencher une alarme ; et le procédé comprend en outre : lorsque la seconde valeur de température est supérieure au sixième point de température, l'émission d'une alarme.

5. Procédé selon la revendication 2, où le réglage de la vitesse de rotation du ventilateur comprend :

lorsque la seconde valeur de température tombe dans un intervalle de valeurs entre le quatrième point de température et le cinquième point de température, l'obtention d'une valeur de température cible préréglée ; et

lorsque la seconde valeur de température atteint la valeur de température cible préréglée, le réglage de la vitesse de rotation du ventilateur pour maintenir la valeur de température à la valeur de température cible préréglée ou dans une plage de fluctuation admissible de la valeur de température cible préréglée.

6. Procédé selon la revendication 1, comprenant en outre :

la surveillance de l'état de fonctionnement de chaque ventilateur dans un groupe spécifié de ventilateurs ; et

lorsqu'il est contrôlé que les états de fonctionnement d'un ou de plusieurs ventilateurs du groupe spécifié de ventilateurs sont anormaux, le réglage des vitesses de rotation des ventilateurs à l'exception du ou des ventilateurs dont les états de fonctionnement sont anormaux du groupe de ventilateurs selon un type d'anomalie, où le type d'anomalie comprend : une augmentation anormale de la vitesse de rotation, une diminution anormale de la vitesse de rotation ou un arrêt de rotation du ventilateur.

7. Procédé selon l'une quelconque des revendications 1 à 6, après réglage de la vitesse de rotation du ventilateur, comprenant :

lorsqu'une valeur de changement de la première valeur de température actuelle collectée dans une seconde période de temps préréglée est supérieure à un second seuil préréglé, le réajustement de la vitesse de rotation du ventilateur.

8. Dispositif pour commander une vitesse de rotation d'un ventilateur dans un dispositif électronique comprenant de multiples ventilateurs, comprenant :

un premier composant d'obtention (72), qui est configuré pour, à une vitesse de rotation actuelle du ventilateur, obtenir une première valeur de température d'un point de collecte de température spécifié dans le dispositif électronique ;

un second composant d'obtention (74), qui est configuré pour obtenir une valeur de changement de la première valeur de température dans une période de temps préréglée ; et

un composant de réglage (76), qui est configuré pour exécuter un procédé de commande selon l'une quelconque des revendications 1 à 7.

At a current rotating speed of the fan, a first temperature value of a specified temperature collecting point in the electronic device is obtained — S102

A change value of the first temperature value in a first preset time period is obtained — S104

When the change value is greater than a first preset threshold, the rotating speed of the fan is adjusted — S106

**Fig. 1**

Start

When a device is started, a value set by a parameter presetting component is read, and the fan is made to run at a rotating speed corresponding to the temperature $T_{start}$ — S202

A temperature value collected by a temperature information collecting component which is read in the timing interval is compared with a preset parameter value, and the rotating speed of the fan is controlled according to a rotating speed adjusting policy — S204

In a temperature rising process, the fan correspondingly increases the rotating speed immediately; in a temperature dropping process, the rotating speed of the fan is adjusted after the temperature stabilizes in the temperature tolerance limit $\Delta T$ — S206

When a fan is in fault, other fans in the same group coordinate the rotating speed, and an alarm that the fan is in fault is given; when the temperature exceeds $T_{alarm}$, an alarm of over-temperature is given — S208

End

**Fig. 2**

**Fig. 3**

**Fig. 4**

**Fig. 5**

**Fig. 6**

First obtaining component
72

Second obtaining component
74

Adjusting component
76

**Fig. 7**

First obtaining component
72

Second obtaining component
74

Comparing element
762

Adjusting element
764

Adjusting component 76

**Fig. 8**

**EP 3 109 480 B1**

**REFERENCES CITED IN THE DESCRIPTION**

**Patent documents cited in the description**

- WO 2013097849 A1
- US 20070076372 A1
- US 20020140389 A1
- US 20070297893 A1
- US 20100103663 A1
- CN 101865151 A